# EUROPEAN PATENT APPLICATION

(11) **EP 3 409 529 A1**
(43) Date of publication of application: **05.12.2018**
(21) Application number: 17201993.7
(22) Date of filing: 16.11.2017
(51) Int. Cl.: B60L 11/18, H02J 7/00

(54) **VEHICLE BATTERY SYSTEM AND METHOD OF CONTROLLING SAME**

(30) Priority: 02.06.2017 KR 20170069100
(71) Applicant: Hyundai Motor Company, Seoul 06797 (KR); Kia Motors Corporation, Seoul 06797 (KR)
(72) Inventor: LEE, Woo Young, 16828 Gyeonggi-do (KR); JUNG, Jin Hwan, 16700 Gyeonggi-do (KR); KIM, Young Jin, 21548 Incheon (KR); AHN, Dong Sup, 06502 Seoul (KR); SONG, Byeong Seob, 16836 Gyeonggi-do (KR); CHOE, Gyu Yeong, 16677 Gyeonggi-do (KR)
(74) Representative: Isarpatent

(57) **Abstract**

A vehicle battery system and a method of controlling the same are provided. When voltage of the vehicle battery is different from an output voltage of a commercially available quick charger, two high-voltage batteries are connected in parallel during battery charging, and the two high-voltage batteries are connected in series during vehicle driving. Accordingly, a compatibility problem is resolved, thereby allowing an inverter, an electric motor, and a connector to have increased efficiency and to maximize a reduction in size, weight, and material cost thereof.

## Description

### BACKGROUND

### Field of the Invention

The present invention relates generally to a vehicle battery system and a method of controlling the same, and more particularly, to a vehicle battery system and a method of controlling the same, in which when a voltage of the vehicle battery is different from an output voltage of a commercially available quick charger, two high-voltage batteries are connected in parallel during battery charging, and the two high-voltage batteries are connected in series during vehicle driving. Accordingly, a compatibility problem is capable of being solved, thereby allowing an inverter, an electric motor, and a connector to have increased efficiency and to maximize a reduction in size, weight, and material cost thereof.

### Description of the Related Art

In general, an eco-friendly vehicle such as a hybrid vehicle, an electric vehicle, etc. require a high-voltage battery capable of storing electric energy, an electric motor as a power source, and an inverter for operating the electric motor. In recent years, various efforts have been made to increase efficiency of the inverter and the electric motor as well as to increase battery capacity for increasing miles per gallon-equivalent (MPGe) of the electric vehicle.

Recently, a method of increasing a voltage of a vehicle battery has been emerging as a method for improving the efficiency of the inverter and the electric motor. For example, when the battery voltage is doubled, according to the equation P=VI, the current flowing through the inverter and the electric motor is reduced by half and the conduction loss (I²R) is reduced by a quarter, based on equal output power. Therefore, the efficiency of the inverter and the electric motor may be increased as the conduction loss is reduced. When using a power device and a conductor having high conduction resistance, it may be possible to reduce the size and material cost of the inverter, the electric motor, and the connector between the battery, the inverter and the electric motor.

However, many commercially available quick chargers currently in the market are only capable of charging a vehicle battery ranging from 200 to 500 V. A compatibility problem with such quick chargers acts as a limitation for increasing the voltage of the vehicle battery. Thus, a solution is needed solve the compatibility problem between the high-voltage battery and the quick chargers.

The foregoing is intended merely to aid in the understanding of the background of the present invention, and is not intended to mean that the present invention falls within the purview of the related art that is already known to those skilled in the art.

### SUMMARY

Accordingly, the present invention provides a vehicle battery system and a method of controlling the same, in which when a voltage of the vehicle battery is different from an output voltage of a commercially available quick charger, two high-voltage batteries are connected in parallel during battery charging, and the two high-voltage batteries are connected in series during vehicle driving, to solve a compatibility problem, thereby allowing an inverter, an electric motor, and a connector have increased efficiency and to maximize a reduction in size, weight, and material cost thereof.

According to one aspect of the present invention, a vehicle battery system may include: first and second high-voltage batteries mounted in the vehicle and configured to supply electric power to a drive unit of the vehicle; a switch unit that forms a parallel or series electrical connection between the first and second high-voltage batteries; and a controller configured to determine an electrical connection state of the switch unit based on whether charging of the first and second high-voltage batteries is required or whether the vehicle is being driven.

When a voltage of an external charging device-side input terminal in the vehicle is a first output voltage for charging the first and second high-voltage batteries, the controller may form the parallel electrical connection between the first and second high-voltage batteries. When a voltage of an external charging device-side input terminal in the vehicle is a second output voltage for charging the first and second high-voltage batteries, the controller may form the series electrical connection between the first and second high-voltage batteries.

When a first output voltage is required for driving the vehicle after charging of the first and second high-voltage batteries is completed, the controller may form the parallel electrical connection between the first and second high-voltage batteries. When a second output voltage is required for driving the vehicle after charging of the first and second high-voltage batteries is complete, the controller may form the series electrical connection between the first and second high-voltage batteries. The drive unit of the vehicle may be an electric motor configured to transmit power to the vehicle by receiving electric power from the first and second high-voltage batteries. The external charging device may be a quick charger.

According to another aspect of the present invention, a method of controlling a vehicle battery system may include: determining whether charging of first and second high-voltage batteries is required; when charging of the first and second high-voltage batteries is required, forming a parallel or series electrical connection between the first and second high-voltage batteries based on whether a voltage of an external charging device-side input terminal in the vehicle is a first output voltage or a second output voltage; determining an output voltage required for driving the vehicle after charging of the first and second high-voltage batteries is complete; and forming the parallel or series electrical connection between the first and second high-voltage batteries based on whether the output voltage required for driving the vehicle is the first output voltage or the second output voltage.

In the forming of the parallel or series electrical connection between the first and second high-voltage batteries based on whether the voltage of the external charging device-side input terminal in the vehicle is the first output voltage or the second output voltage, when the voltage of the external charging device-side input terminal in the vehicle is the first output voltage, the parallel electrical connection may be formed between the first and second high-voltage batteries, and when the voltage of the external charging device-side input terminal in the vehicle is the second output voltage, the series electrical connection may be formed between the first and second high-voltage batteries.

Additionally, in the forming of the parallel or series electrical connection between the first and second high-voltage batteries based on whether the output voltage required for driving the vehicle is the first output voltage or the second output voltage, when the output voltage required for driving the vehicle is the first output voltage, the parallel electrical connection is formed between the first and second high-voltage batteries, and when the output voltage required for driving the vehicle is the second output voltage, the series electrical connection is formed between the first and second high-voltage batteries. The external charging device may be a quick charger.

According to the vehicle battery system and the method of controlling the same, when a voltage of the vehicle battery is different from an output voltage of a commercially available quick charger, two high-voltage batteries may be connected in parallel during battery charging, and the two high-voltage batteries may be connected in series during vehicle driving, and thus it may be possible to solve the compatibility problem, thereby allowing the inverter, the electric motor, and the connector to have increased efficiency and to maximize the reduction in size, weight, and material cost thereof

Further, when a vehicle equipped with batteries having a voltage greater than an output voltage of a commercially available quick charger, when two batteries are configured in parallel during battery charging and in series during vehicle driving as in the present invention, the batteries may be charged using a commercially available quick charger. In other words, even when a voltage a new vehicle battery is increased greater than that of an existing vehicle battery, it is compatible with the quick charger. Further, when using the high-voltage quick charger that has been developed recently, two batteries may be connected in series and charged. The electrical system requiring high voltage may use a voltage of two batteries connected in series, while the electrical system requiring low voltage may use a voltage of one battery.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a configuration diagram showing a vehicle battery system according to an exemplary embodiment of the present invention;
FIG. 2 is a configuration diagram showing the vehicle battery system according to the exemplary embodiment of the present invention;
FIG. 3 is a configuration diagram showing the vehicle battery system according to the exemplary embodiment of the present invention;
FIG. 4 is a configuration diagram showing the vehicle battery system according to the exemplary embodiment of the present invention;
FIG. 5 is a configuration diagram showing the vehicle battery system according to the exemplary embodiment of the present invention; and
FIG. 6 is a flow chart showing a method of controlling a vehicle battery system according to an exemplary embodiment of the present invention.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Furthermore, control logic of the present invention may be embodied as non-transitory computer readable media on a computer readable medium containing executable program instructions executed by a processor, controller/control unit or the like. Examples of the computer readable mediums include, but are not limited to, ROM, RAM, compact disc (CD)-ROMs, magnetic tapes, floppy disks, flash drives, smart cards and optical data storage devices. The computer readable recording medium can also be distributed in network coupled computer systems so that the computer readable media is stored and executed in a distributed fashion, e.g., by a telematics server or a Controller Area Network (CAN).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof As used herein, the term "and/or" includes any and all combinations of one or more of the associated listed items.

Unless specifically stated or obvious from context, as used herein, the term "about" is understood as within a range of normal tolerance in the art, for example within 2 standard deviations of the mean. "About" can be understood as within 10%, 9%, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Hereinbelow, a vehicle battery system and a method of controlling the same according to exemplary embodiments of the present invention will be described in detail with reference to the accompanying drawings.

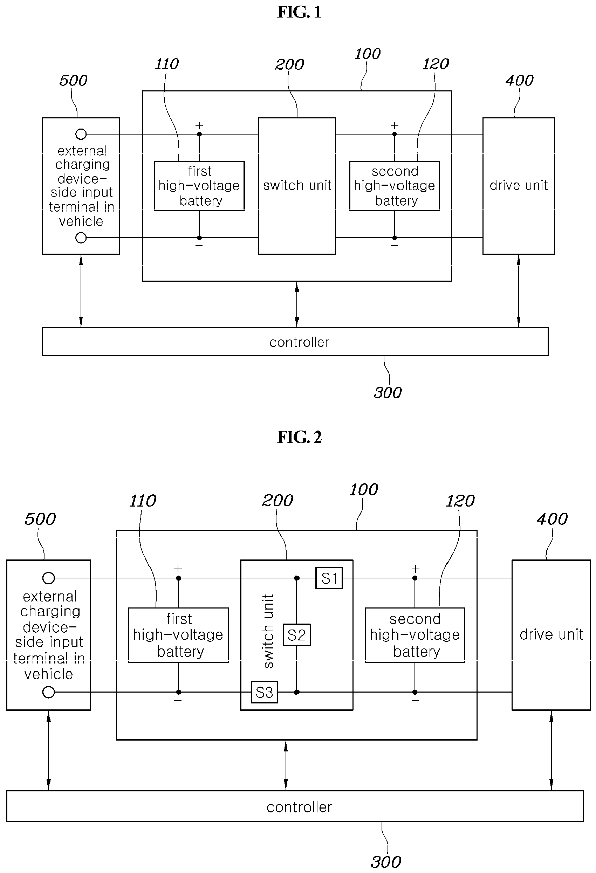

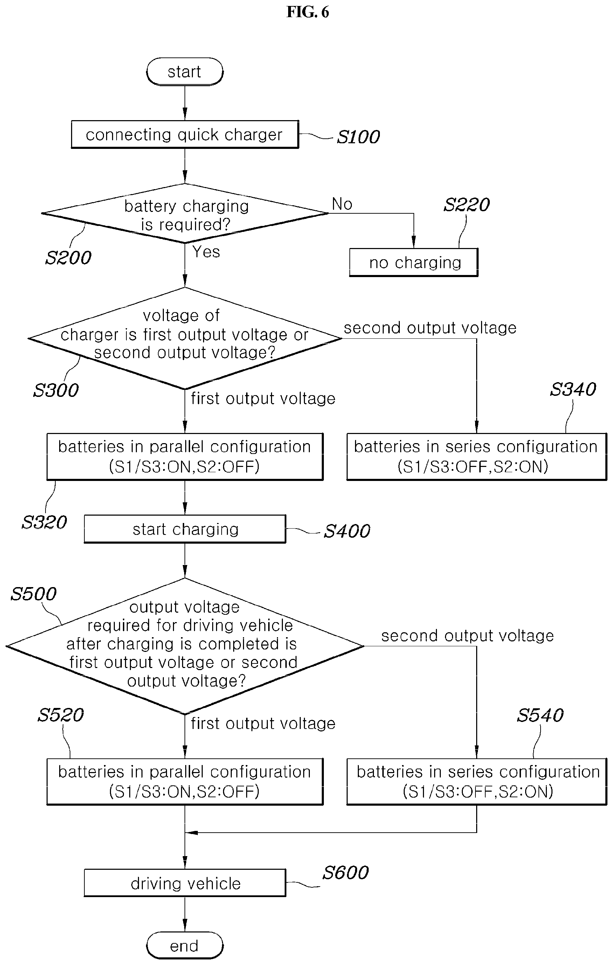

FIGS. 1-5 are configuration diagrams showing a vehicle battery system according to an exemplary embodiment of the present invention and FIG. 6 is a flow chart showing a method of controlling a vehicle battery system according to an exemplary embodiment of the present invention.

Referring to FIG. 1, the vehicle battery system according to the exemplary embodiment of the present invention may include: first and second high-voltage batteries 110 and 120 mounted in a vehicle and configured to supply electric power to a drive unit 400 of the vehicle; a switch unit 200 that forms a parallel or series electrical connection between the first and second high-voltage batteries 110 and 120; and a controller 300 configured to determine an electrical connection state of the switch unit 200 based on whether charging of the first and second high-voltage batteries 110 and 120 is required or whether the vehicle is being driven.

In particular, in the exemplary embodiment of the present invention, the drive unit 400 of the vehicle may be a drive electric motor. Further, an external charging device may be connected to an external charging device-side input terminal 500 within the vehicle, the external charging device may be a commercially available quick charger having an output voltage range of about 200 to 500 V or a high-voltage quick charger having an output voltage of equal to or greater than about 500 V.

In the exemplary embodiment of the present invention, a high-voltage battery unit 100 may include two high-voltage batteries of about 500 V or greater, and the first high-voltage battery and the second high-voltage battery may have the same voltage. For example, when a voltage of the high-voltage battery unit 100 is about 600 V, voltages of the first and second high-voltage batteries 110 and 120 maybe about 300 V, respectively.

Referring to FIG. 2, the switch unit 200 may include: a first switch S1 connected at a first side thereof to a positive output terminal of the first high-voltage battery, and at a second side thereof to a positive input terminal of the second high-voltage battery; a second switch S2 connected at a first side thereof to the positive output terminal of the first high-voltage battery, and at a second side thereof to a negative input terminal of the second high-voltage battery; and a third switch S3 connected at a first side thereof to a negative output terminal of the first high-voltage battery, at a second side thereof to the negative input terminal of the second high-voltage battery.

The controller 300 may be configured to determine the electrical connection state of the switch unit 200 based on whether charging of the first and second high-voltage batteries 110 and 120 is required or whether the vehicle is being driven. When a voltage of the external charging device-side input terminal 500 in the vehicle is a first output voltage for charging the first and second high-voltage batteries 110 and 120, the controller 300 may form the parallel electrical connection between the first and second high-voltage batteries 110 and 120.

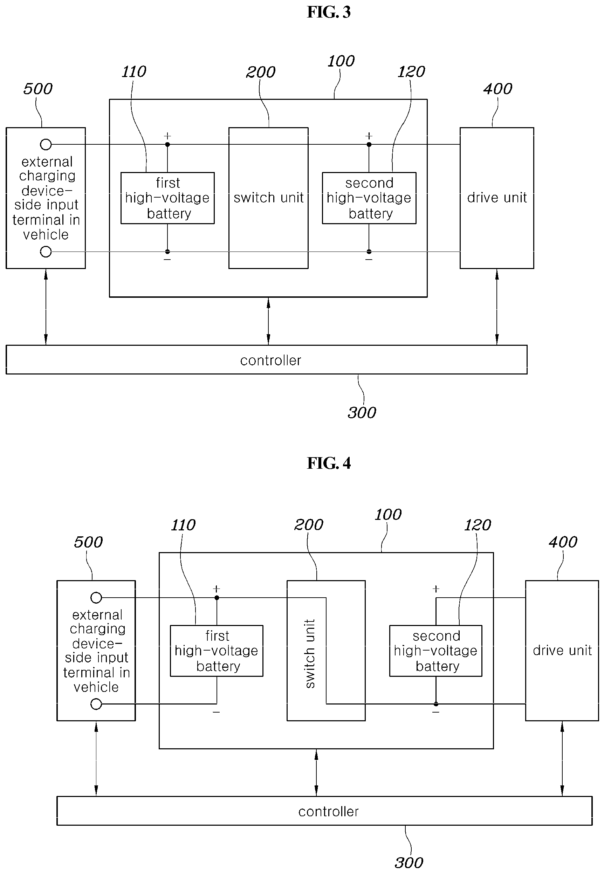

In particular, when the voltage of the external charging device-side input terminal 500 in the vehicle is the first output voltage, the external charging device may be a commercially available quick charger and the output voltage thereof is about 200 to 500 V. Referring to FIG. 3, when a commercially available quick charger is connected to the vehicle, the controller 300 may be configured to measure the voltage of the external charging device-side input terminal 500. When the controller 300 determines that a measured voltage is the first output voltage, the controller 300 may form the parallel electrical connection between the first high-voltage battery 110 and the second high-voltage battery 120 by turning on the first and third switches S1 and S3 and by turning off the second switch S2. Even when a commercially available quick charger and the batteries have different voltages from each other, charging of the batteries may be possible.

When a voltage of the external charging device-side input terminal 500 is a second output voltage for charging the first and second high-voltage batteries 110 and 120, the controller 300 may form the series electrical connection between the first and second high-voltage batteries 110 and 120. In particular, when the voltage of the external charging device-side input terminal 500 in the vehicle is the second output voltage, the external charging device may be the high-voltage quick charger and the output voltage thereof is equal to or greater than about 500 V.

Referring to FIG. 4, when the high-voltage quick charger is connected to the vehicle, the controller 300 may be configured to measure the voltage of the external charging device-side input terminal 500. When the controller 300 determines that a measured voltage is the second output voltage, the controller 300 may form the series electrical connection between the first and second high-voltage batteries 110 and 120 by turning off the first and third switches S1 and S3 and by turning on the second switch S2. Even when the external charging device is any of a commercially available quick charger or the high-voltage quick charger, the charging device may be compatible with the high-voltage batteries in the vehicle.

Meanwhile, when the first output voltage is required for driving the vehicle after charging of the first and second high-voltage batteries 110 and 120 is complete, the controller 300 may form the parallel electrical connection between the first and second high-voltage batteries 110 and 120. In particular, the first output voltage may be the output voltage of about 200 to 500 V as described above. When the first output voltage is required for driving the vehicle after the first and second high-voltage batteries 110 and 120 are charged with the first output voltage or the second output voltage, the controller 300 may form the parallel electrical connection between the first and second high-voltage batteries 110 and 120 by turning on the first and third switches S1 and S3 and by turning off the second switch S2. Particularly, when the first output voltage is required for driving the vehicle after charging is complete, a large driving force from a motor is not required in the vehicle such as an eco-friendly vehicle including a hybrid vehicle and an electric vehicle. In other words, the vehicle starts or slowly accelerates or the required driving force of the motor is minimal due to an engine intervention in a HEV mode.

Further, when the second output voltage is required for driving the vehicle after charging of the first and second high-voltage batteries 110 and 120 is complete, the controller 300 may form the series electrical connection between the first and second high-voltage batteries 110 and 120. In particular, the first output voltage may be the output voltage of equal to or greater than about 500 V as described above. When the second output voltage is required for driving the vehicle after the first and second high-voltage batteries 110 and 120 are charged with the first output voltage or the second output voltage, the controller 300 may form the series electrical connection between the first and second high-voltage batteries 110 and 120 by turning off the first and third switches S and S3 and by turning on the second switch S2. When the second output voltage is required for driving the vehicle after charging is complete may correspond to when the large driving force from the motor is required in the vehicle such as eco-friendly vehicle including the hybrid vehicle and the electric vehicle. In other words, the vehicle may be traveling uphill or may be accelerated rapidly, the vehicle may also be driven only by the motor in the HEV mode.

The following will describe various exemplary embodiments relating to operation of the controller 300 when the vehicle is being driven and during charging. First, when a commercially available quick charger is connected to the external charging device-side input terminal 500 in the vehicle and the first output voltage is measured at the external charging device-side input terminal 500, the controller 300 may be configured to turn on the first and third switches S1 and S3, and turn off the second switch S2, to form the parallel electrical connection between the first and second high-voltage batteries 110 and 120. Further, when the second output voltage is required for driving the vehicle after charging of the battery is complete, the controller 300 may be configured to turn off the first and third switches S1 and S3 and turn on the second switch S2 to form the series electrical connection between the first and second high-voltage batteries 110 and 120.

When the high-voltage quick charger is connected to the external charging device-side input terminal 500 in the vehicle and the second output voltage is measured at the input terminal 500 of the external charging device, the controller 300 may be configured to turn off the first and third switches S1 and S3 and turn on the second switch S2 to form the series electrical connection between the first and second high-voltage batteries 110 and 120. Further, when the second output voltage is required for driving the vehicle after charging of the battery is complete, the controller 300 may be configured to maintain the series electrical connection. When the first output voltage is required for driving the vehicle after the batteries are charged with the second output voltage, the controller 300 may be configured to turn on the first and third switches S1 and S3 and turn off the second switch S2 to form the parallel electrical connection between the first and second high-voltage batteries 110 and 120.

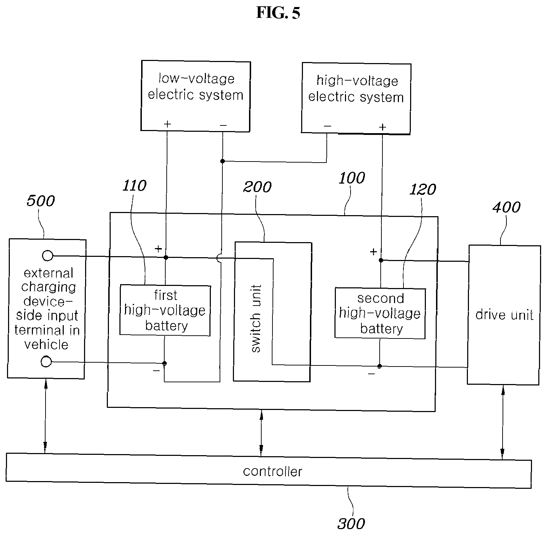

FIG. 5 is the configuration diagram showing the vehicle battery system when both the first output voltage and the second output voltage are required for driving the vehicle after charging of the battery is complete. There are situations where it is advantageous to use some of various electric systems in the vehicle at low voltage, and to use the remaining systems at high voltage. In particular, as shown in FIG. 5, an electric system requiring low voltage, that is, the first output voltage, may use an output voltage of a first high-voltage battery, and an electric system requiring high voltage, that is, the second output voltage, may use an output voltage of the first and second high-voltage batteries connected in series. Thus, the electric system requiring high voltage may use a voltage of series-connected two batteries, while the electrical system requiring low voltage may use a voltage of one battery. In addition, electric systems requiring high voltage include a motor having a substantial power capacity, and electric systems requiring low voltage include an air conditioner, an oil pump, and a cooling water pump that have a small power capacity.

The drive unit 400 of the vehicle may be configured to transmit power to the vehicle by receiving electric power from the first and second high-voltage batteries 110 and 120. In other words, when the controller 300 forms the series electrical connection between the first and second high-voltage batteries 110 and 120, the drive unit 400 may be configured to transmit power to the vehicle by receiving electric power of high voltage (e.g., equal to or greater than about 500 V) from the first and second high-voltage batteries 110 and 120 connected to each other in series. When the controller 300 forms the parallel electrical connection between the first and second high-voltage batteries 110 and 120, the drive unit 400 may be configured to transmit power to the vehicle by receiving electric power of low voltage (e.g., about 200 to 500 V) from the first and second high-voltage batteries 110 and 120 connected to each other in parallel.

Referring to FIG. 6, a method of controlling a vehicle battery system according to an exemplary embodiment of the present invention is provided. The method described herein below may be executed by a controller. The method may include: determining whether charging of first and second high-voltage batteries is required (S200); forming a parallel or series electrical connection between the first and second high-voltage batteries based on whether a voltage of an external charging device-side input terminal in the vehicle is a first output voltage or a second output voltage when charging of the first and second high-voltage batteries is required (S300, S320, and S340); determining an output voltage required for driving the vehicle after charging of the first and second high-voltage batteries is completed (S500); and forming the parallel or series electrical connection between the first and second high-voltage batteries based on whether an output voltage required for driving the vehicle is the first output voltage or the second output voltage (S520 and S540).

The method may further include determining whether a quick charger is connected (S100) before determining whether charging of the first and second high-voltage batteries is required (S200). When the quick charger is connected to the external charging device-side input terminal in the vehicle, whether charging of the high-voltage batteries is required may first be determined (S200). In response to determining that charging of the battery is required, the controller 400 may be configured to determine whether an output voltage measured at the external charging device-side input terminal, that is, a voltage of the quick charger, is the first output voltage or the second output voltage (S300).

When the voltage of the external charging device-side input terminal, that is, the voltage of the charger, is the first output voltage, the controller 400 may form the parallel electrical connection between the first and second high-voltage batteries 110 and 120 (switches S1 and S3 are ON, switch S2 is OFF). When the voltage of the external charging device-side input terminal is the second output voltage, the controller 400 may form the series electrical connection between the first and second high-voltage batteries 110 and 120 (switches S1 and S3 are OFF, switch S2 is ON). According to the voltage of the external charging device-side input terminal, that is, the voltage of the charger, the parallel or series electrical connection may be formed between the first and second high-voltage batteries 110 and 120 and then charging of first and second high-voltage batteries 110 and 120 may be started (S400).

After charging of the battery is completed, whether the output voltage required for driving the vehicle is the first output voltage or the second output voltage may be determined (S500). When the output voltage required for driving the vehicle is the first output voltage, the parallel electrical connection may be formed between the first and second high-voltage batteries 110 and 120 (switches S 1 and S3 are ON, switch S2 is OFF). When the output voltage required for driving the vehicle is the second output voltage, the series electrical connection may be formed between the first and second high-voltage batteries 110 and 120 (switches S1 and S3 are OFF, switch S2 is ON) (S520, S540).

As described above, the vehicle battery system and the method of controlling the same according to various exemplary embodiments of the present invention may allow an inverter, an electric motor, and a connector to have increased efficiency and to maximize a reduction in size, weight and material cost thereof. Further, when a vehicle equipped with batteries having a voltage higher than the output voltage of a commercially available quick charger, when two batteries are configured in parallel during battery charging and in series during vehicle driving as in the present invention, the batteries may be charged using a commercially available quick charger. In other words, even when voltage of a new vehicle battery is increased to be greater than that of an existing vehicle battery, it is compatible with the quick charger. When using the developed high-voltage quick charger, two batteries may be connected in series and charged. Further, the electrical system requiring high voltage may use voltage of two batteries connected in series, while the electrical system requiring low voltage may use voltage of one battery.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A vehicle battery system, comprising:
first and second high-voltage batteries mounted within a vehicle and configured to supply electric power to a drive unit of the vehicle;
a switch unit that forms a parallel or series electrical connection between the first and second high-voltage batteries; and
a controller configured to determine an electrical connection state of the switch unit according to whether charging of the first and second high-voltage batteries is required or whether the vehicle is being driven.

2. The system of claim 1, wherein when a voltage of an external charging device-side input terminal in the vehicle is a first output voltage for charging the first and second high-voltage batteries, the controller forms the parallel electrical connection between the first and second high-voltage batteries.

3. The system of claim 1, wherein when a voltage of an external charging device-side input terminal in the vehicle is a second output voltage for charging the first and second high-voltage batteries, the controller forms the series electrical connection between the first and second high-voltage batteries.

4. The system of claim 1, wherein when a first output voltage is required for driving the vehicle after charging of the first and second high-voltage batteries is complete, the controller forms the parallel electrical connection between the first and second high-voltage batteries.

5. The system of claim 1, wherein when a second output voltage is required for driving the vehicle after charging of the first and second high-voltage batteries is complete, the controller forms the series electrical connection between the first and second high-voltage batteries.

6. The system of claim 1, wherein the drive unit of the vehicle is an electric motor configured to transmit power to the vehicle by receiving electric power from the first and second high-voltage batteries.

7. The system of claim 2, wherein the external charging device is a quick charger.

8. A method of controlling a vehicle battery system, comprising:
determining, by a controller, whether charging of first and second high-voltage batteries is required;
forming, by the controller, a parallel or series electrical connection between the first and second high-voltage batteries based on whether a voltage of an external charging device-side input terminal in the vehicle is a first output voltage or a second output voltage when charging of the first and second high-voltage batteries is required;
determining, by the controller, an output voltage required for driving the vehicle after charging of the first and second high-voltage batteries is complete; and
forming, by the controller, the parallel or series electrical connection between the first and second high-voltage batteries based on whether the output voltage required for driving the vehicle is the first output voltage or the second output voltage.

9. The method of claim 8, wherein in the forming of the parallel or series electrical connection between the first and second high-voltage batteries based on whether the voltage of the external charging device-side input terminal in the vehicle is the first output voltage or the second output voltage, when the voltage of the external charging device-side input terminal in the vehicle is the first output voltage, the parallel electrical connection is formed between the first and second high-voltage batteries, and when the voltage of the external charging device-side input terminal in the vehicle is the second output voltage, the series electrical connection is formed between the first and second high-voltage batteries.

10. The method of claim 8, wherein in the forming of the parallel or series electrical connection between the first and second high-voltage batteries based on whether the output voltage required for driving the vehicle is the first output voltage or the second output voltage, when the output voltage required for driving the vehicle is the first output voltage, the parallel electrical connection is formed between the first and second high-voltage batteries, and when the output voltage required for driving the vehicle is the second output voltage, the series electrical connection is formed between the first and second high-voltage batteries.

11. The method of claim 8, wherein the external charging device is a quick charger.
